(19)

Europäisches
Patentamt
European
Patent Office
Office européen
des brevets

(11) **EP 2 913 953 A1**

(12) **EUROPEAN PATENT APPLICATION**

(43) Date of publication:
**02.09.2015 Bulletin 2015/36**

(51) Int Cl.:
*H04L 5/00* *(2006.01)*       *H04L 25/03* *(2006.01)*
*H04L 27/26* *(2006.01)*       *H04B 1/00* *(2006.01)*

(21) Application number: **14305273.6**

(22) Date of filing: **26.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Wild, Thorsten**
**70435 Stuttgart (DE)**

• **Schaich, Frank**
**70435 Stuttgart (DE)**

(74) Representative: **2SPL Patentanwälte PartG mbB**
**Postfach 15 17 23**
**80050 München (DE)**

Remarks:
Amended claims in accordance with Rule 137(2) EPC.

(54) **Filtered Multicarrier system for fragmented spectrum**

(57)     Flexible allocation of resources for a fragmented spectrum, ie cognitive radio. Non contiguous frequency blocks are allocated to a user. The transmitter uses a so-called Universal Filtered Multicarrier system where a multiband OFDM transmission occurs with parallel transmission chains, one per frequency block. To completely use a frequency block, the size of the LTE Physical Resource Block, PRB, might be modified to fit to the available bandwidth. In each transmission chain, a sideband or sidelobe suppression filtering is performed on each frequency block to obtain the filtered multicarrier UFMC signal.

Fig. 2

**Description**

Embodiments of the present disclosure relate to communication systems and, more particularly, to communication systems employing multicarrier signals.

Background

This section introduces aspects that may be helpful in facilitating a better understanding of the inventions. Accordingly, the statements of this section are to be read in this light and are not to be understood as admissions about what is in the prior art or what is not in the prior art.

In fragmented spectrum scenarios due to a coexistence of primary and secondary systems, for example, spectrum slices being available for opportunistic access are rarely fitting into predefined bandwidths being supported by conventional wireless communication systems. For such scenarios Orthogonal Frequency Division Multiplexing (OFDM) is, for example, less suited due to high out of band radiation. Furthermore, OFDM uses a predefined or fixed and hence inflexible subcarrier grouping, also referred to as Physical Resource Blocks (PRBs) in 3rd Generation Partnership (3GPP) terminology. This fixed grouping typically is required to enable efficient channelization, resource allocation and the related resource addressing.

It is desirable to provide more flexible alternatives to OFDM, in particular with regard to an efficient use in fragmented spectrum scenarios.

Summary

Some simplifications may be made in the following summary, which is intended to highlight and introduce some aspects of the various exemplary embodiments, but such simplifications are not intended to limit the scope of embodiments. Detailed descriptions of a preferred exemplary embodiment adequate to allow those of ordinary skill in the art to make and use the inventive concepts will follow in later sections.

According to one aspect of the present disclosure it is provided an apparatus for providing a multicarrier signal. The apparatus includes a processor module configured or operable to provide a first plurality of subcarriers of the multicarrier signal in a first frequency block. The processor module is also configured to provide a second plurality of subcarriers of the multicarrier signal in a second frequency block. According to embodiments a bandwidth of the first frequency block differs from a bandwidth of the second frequency block. The apparatus further includes a first filter module configured or operable to filter the first frequency block for sideband suppression outside of the first frequency block. The apparatus also includes a second filter module configured to filter the second frequency block for sideband suppression outside of the second frequency block.

According to one aspect of the present disclosure it is provided a method for providing a multicarrier signal. The method includes an act of providing a first plurality of subcarriers of the multicarrier signal in a first frequency block and an act of providing a second plurality of subcarriers of the multicarrier signal in a second frequency block. A bandwidth of the first frequency block differs from a bandwidth of the second frequency block. Further, the method includes filtering the first frequency block for sideband suppression outside of the first frequency block and filtering the second frequency block for sideband suppression outside of the second frequency block.

According to some embodiments, the apparatus and/or the method may be implemented in a base station or a mobile terminal of a wireless communication system.

Some embodiments comprise digital circuitry installed within the apparatus for performing the respective acts. Such a digital control circuitry, e.g., a Digital Signal Processor (DSP), a Field-Programmable Gate Array (FPGA), an Application-Specific Integrated Circuit (ASIC), or a general purpose processor may be coupled to memory circuitry and needs to be configured accordingly by hardware and/or software. Hence, yet further embodiments also provide a computer program having a program code for performing embodiments of the method, when the computer program is executed on a computer or a programmable hardware device.

According to some embodiments the first and the second frequency block may be contiguous frequency blocks or frequency sub-bands, respectively. Contrary to conventional communication systems, the first frequency block comprising the first plurality of subcarriers and the second frequency block comprising the second plurality of subcarriers may be filtered frequency-block-wise and separate from each other. This technique will also be referred to as Universal Filtered Multicarrier (UFMC) in the sequel. The first and second frequency block may also be regarded as first and second Physical Resource Blocks (PRBs). However, according to embodiments, the sizes of the first and second PRBs are different and may be dynamically adjustable to observed spectral environments. Hence, by adapting the bandwidth of the first and/or the second PRB, an overall bandwidth of the multicarrier signal or a sub-band thereof is adaptable to arbitrary spectral environments. The adjustment of the signal/carrying bandwidth may be done via activating/deactivating one or more subcarriers of the first and/or the second frequency blocks without taking into account a prescribed or predefined subcarrier grouping.

Embodiments may enable a wireless system based on filtered multicarrier to efficiently access fragmented spectrum without breaking system procedures relying on subcarrier grouping. Increased spectral efficiency and adaptability may be realized without complication of channelization, resource grouping and/or higher layer functionalities.

Brief description of the Figures

Some embodiments of apparatuses and/or methods will be described in the following by way of example only, and with reference to the accompanying figures, in which

Fig. 1    illustrates a block diagram of an apparatus for providing a multicarrier signal, according to an embodiment;

Fig. 2    illustrates a block diagram of an apparatus for providing a multicarrier signal, according to a further embodiment;

Fig. 3    illustrates a fragmented spectrum environment;

Fig. 4    illustrates potential resource wastage at sub-band edges, if PRB-wise processing is applied;

Fig. 5    illustrates a wider PRB at the edge of a sub-band to avoid spectral wastage;

Fig. 6    illustrates a smaller PRB at the edge of a sub-band to avoid spectral wastage;

Fig. 7    illustrates an adjustment of PRB width depending on a sub-band width to avoid spectral wastage;

Fig. 8    shows subcarrier blanking and frequency shift of an edge PRB; and

Fig. 9    illustrates a flow chart of a method for providing a multicarrier signal, according to a further embodiment

Description of Embodiments

Various example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures. It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g.., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/ or "including," when used herein, specify the presence of stated features, integers, steps, operations, elements and/or components, but do not preclude the presence or addition of one or more other features, integers, steps, operations, elements, components and/ or group thereof.

It should also be noted that in some alternative implementations, the functions/ acts noted may occur out of the order noted in the figures. For example, two figures shown in succession may in fact, be executed substantially concurrently or may sometimes be executed in the reverse order, depending upon the functionality /acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation of data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, Compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), Digital Signal Processors (DSPs), application-specific -integrated- circuits, Field Programmable Gate Arrays (FPGAs) computers or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

As disclosed herein, the term "storage medium", "storage unit" or "computer readable storage medium" may represent one or more devices for storing data, including Read Only Memory (ROM), Random Access Memory (RAM), magnetic RAM, core memory, magnetic disk storage mediums, optical storage mediums, flash memory devices and/ or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and /or receiving information, data, arguments, parameters or memory contents. Information, arguments, parameters, data, etc. may be passed, forwarded, or transmitted via any suitable means including memory sharing, message passing, token passing, network transmission, etc.

As used herein, the term "user equipment" or "UE" may be synonymous to a user equipment, mobile station, mobile user, access terminal, mobile terminal, user, subscriber, wireless terminal, terminal and /or remote station and may describe a remote user of wireless resources in a wireless communication network. Accordingly, a UE may be a wireless phone, wireless equipped laptop, wireless equipped appliance, etc. The term "base station" may be understood as a one or more cell sites, base stations, nodeBs, enhanced NodeBs, access points, and/or any terminus of radio frequency communication. Although current network architectures may consider a distinction between mobile/user devices and access points/cell sites, the example embodiments described hereafter may also generally be applicable to architectures where that distinction is not so clear, such as ad hoc and/or mesh network architectures, for example. Communication from the base station to the UE is typically called downlink or forward link communication. Communication from the UE to the base station is typically called uplink or reverse link communication.

In conventional wireless multicarrier communication systems, such as 3GPP's Long-Term Evolution (LTE) for example, the basic unit of physical resource on the physical layer (or Layer 1) is the so-called Physical Resource Block (PRB). In LTE, for example, one PRB is 0.5 ms and contains 12 subcarriers for each OFDM symbol in frequency domain. Each PRB comprises a predefined number of Resource Elements (REs), wherein a RE is the smallest defined unit which consists of one OFDM sub-carrier during one OFDM symbol interval. In LTE the subcarrier spacing is fixed to 15 kHz, with a reduced subcarrier spacing of 7.5 kHz available for some MB-SFN scenarios. This results in a fixed PRB bandwidth of 180 kHz for the example of LTE. This subcarrier grouping typically is required to enable efficient channelization, resource allocation and the related resource addressing. Further, the LTE standard defines several predefined system bandwidths ranging from 1.25 MHz (corresponding to 6 PRBs), 2.5 MHz, 5 MHz, 10 MHz, 15 MHz to 20 MHz (corresponding to 100 PRBs).

The conventionally fixed PRB bandwidth may be disadvantageous in certain fragmented spectrum scenarios, where available spectral gaps are not an integer multiple of the fixed PRB bandwidth. In such cases a highly efficient access of fragmented spectrum without wasting valuable spectral resource is hardly possible. Therefore embodiments of the present disclosure propose a highly flexible multicarrier signaling concept for opportunistic access of fragmented spectrum.

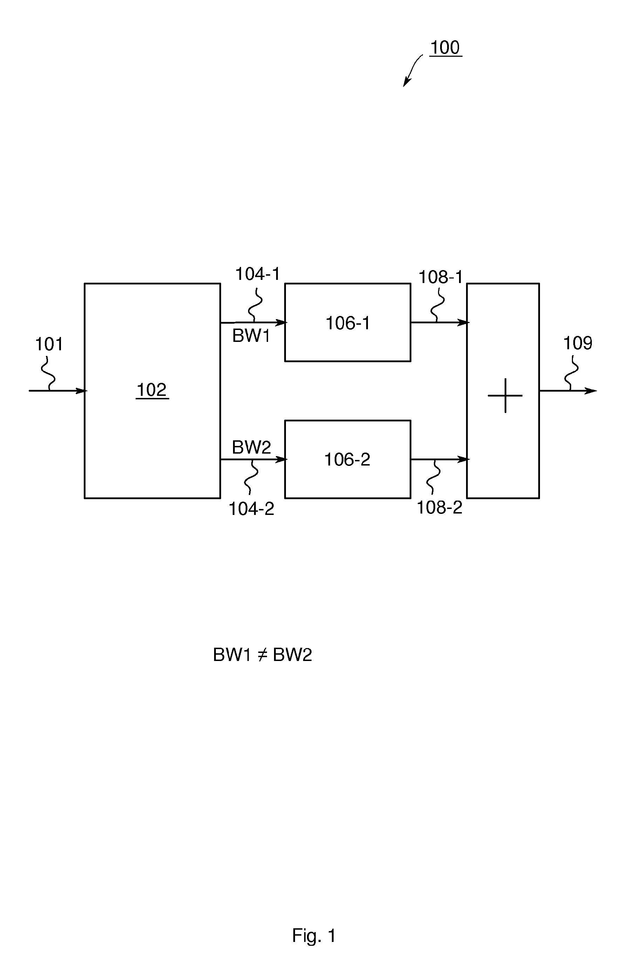

Fig. **1** illustrates a block diagram of an apparatus 100 for providing a multicarrier signal 109, according to an example embodiment.

The apparatus 100 includes a processor module 102. The processor module 102 may be configured to receive an input signal 101 and to provide, based on a first part of the input signal 101, a first plurality of subcarriers of the multicarrier signal 109 in a first frequency block or sub-band 104-1. Further, the processor module 102 may be configured to provide, based on a second part of the input signal 101, a second plurality of subcarriers of the multicarrier signal in a second frequency block or sub-band 104-2. The example signals 104-1, 104-2 may also be understood as sub-band signals. In some embodiments the first and second frequency blocks may be continuous in frequency, respectively. This means that the first plurality of subcarriers of the first frequency block 104-1 may be adjacent subcarriers. Likewise, the second plurality of subcarriers of the second frequency block 104-2 may be adjacent subcarriers. Also, although not necessary, the first and second frequency blocks may be spectrally adjacent, i.e. contiguous, in some embodiments.

According to embodiments of the present disclosure, the processor module 102 is configured to provide the sub-band signals 104-1, 104-2 such that a bandwidth BW1 of the first frequency block 104-1 differs from a bandwidth BW2 of the second frequency block 104-2, i.e., BW1 ≠ BW2. For example, the processor module 102 may be configured to individually adjust a bandwidth of the first and/or the second frequency block in response to an observed spectral environment, for example, in response to an observed or predetermined usage of bandwidth. In this way the PRBs of the multicarrier signal 109 may be efficiently conditioned to actually prevailing environmental needs without wasting scarce spectral resources.

For spectral shaping of the first frequency block, the apparatus 100 further includes a first filter module 106-1 which is configured to filter the (for example on the whole) first frequency block 104-1 for sideband suppression outside of the first frequency block. The first filter module 106-1 may output a first filtered sub-band signal 108-1. The apparatus 100 also includes a second filter module 106-2 which is configured to filter the second frequency block 104-2 (for example on the whole) for sideband suppression outside of the second frequency block. The second filter module 106-2 may output a second filtered sub-band signal 108-2, which may be combined with the first filtered sub-band signal 108-1 to obtain the multicarrier signal 109. Thereby, the first and the second filter modules 106-1, 106-2 may filter the first frequency block 104-1 and the second frequency block 104-2 separately from each other, which means that the first frequency block 104-1 is not filtered by the second filter module 106-2 and that the second frequency block 104-2 is not filtered by the first filter module 106-1. That is to say, a signal including the first plurality of subcarriers of the first frequency block 104-1 may be filtered separately from a signal including the second plurality of subcarriers of the second frequency block 104-2. Hence, one idea of the present disclosure is constructing filtered signal modules, which contain block-wise filtered multi-carrier signals, like Universal Filtered Multi-Carrier (UFMC).

The skilled person having benefit of the present disclosure will appreciate that the resulting multicarrier signal 109 may typically include more than two frequency blocks (PRBs) in practical implementations. In general there may be an integer number of $p \geq 2$ frequency blocks per multicarrier signal 109. Further, the skilled person will appreciate that embodiments of the apparatus 100 may be used in base stations as well as in mobile terminals of present or future wireless communication systems.

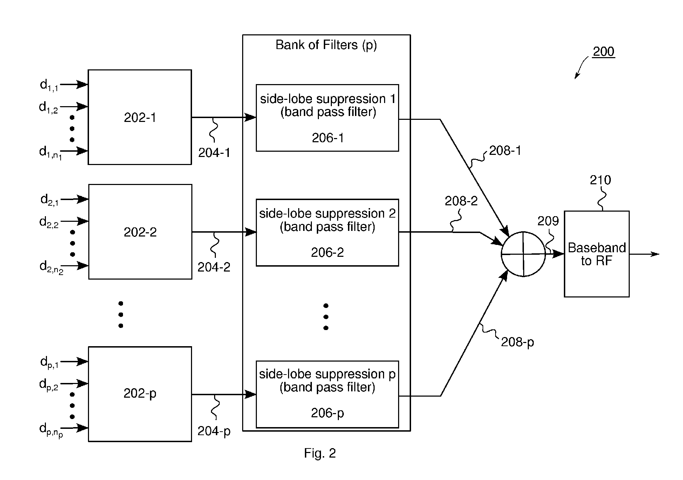

Fig. 2 schematically illustrates a more detailed block diagram of an embodiment of a transmitter apparatus 200 for conditioning an UFMC multi-carrier signal 209.

The example UFMC transmitter apparatus 200 may be characterized by a frequency block-wise IDFT (IDFT = Inverse Discrete Fourier Transformation). That is to say, input data symbols $d_{i,j}$ $(i = 1 \ldots p; j = 1 \ldots n_p)$ may be modulated onto p groups (or frequency blocks) each comprising an individual number of $n_p$ subcarriers. In some embodiments the number of subcarriers, and hence the bandwidth, per frequency block (also referred to as PRB) may deviate from each other, yielding to high flexibility, in particular with respect to fragmented spectrum applications. Also note that $n_p$ may even go down to one in some embodiments.

Each frequency block $i$ may be converted from frequency-domain to time-domain by a frequency block specific IDFT module 202-1, 202-2, ..., 202-$p$ of processor module 202 to obtain $p$ time-domain signals 204-1, 204-2, ..., 204-$p$. The apparatus' processor module 202 may hence be configured to perform an IDFT of the first frequency block to generate a first time domain signal 204-1 corresponding to the first plurality of subcarriers and to perform an IDFT of the second frequency block to generate a second time domain signal 204-2 corresponding to the second plurality of subcarriers, and so on. In some embodiments the IDFT modules 202-1, 202-2, etc. of processor module 202 may also be configured, respectively, to perform a first frequency shift to a first frequency range for the first frequency block and to perform a second frequency shift to a second frequency range for the second frequency block, etc.. Thereby the different frequency block may be allocated to different spectral areas of a fragmented spectrum, for example.

The time-domain signals 204-1, 204-2, ..., 204-p may then be individually filtered by frequency block specific side-lobe suppression filters 206-1, 206-2, ..., 206-*p*, which may be lowpass or bandpass filters - depending on the technical implementation and/or the desired frequencies. The filtered time domain signals 208-1, 208-2, ..., 208-*p* may then be combined to the UFMC multi-carrier signal 209 and converted from baseband to Radio Frequency (RF) domain. Note that the splitting of processing functions across processing units shown in Fig. 2 is not critical, and, as can be understood by those skilled in the art, the number of processing units, the number of processing functions and an allocation of the processing functions to the processing units may vary without departing from the scope of embodiments.

The processing functions of the example transmitter 200 may be split into a first group of processing units 202-1, 202-2, ..., 202-*p* and a second group of band pass filters 206-1, 206-2, ..., 206-*p*. A mathematical description of a transmitted complex-valued time-domain signal vector X may be given, for example, by following equation:

$$\mathbf{x} = \sum_{i=1}^{p} \mathbf{F}_i \mathbf{V}_i \mathbf{d}_i \qquad (1)$$

with

p: number of frequency blocks,

$\mathbf{F}_i$: so-called Toeplitz matrix for number *i* of the frequency blocks, which contains a bandpass FIR filter (FIR = Finite Impulse Response) for filtering the number *i* of the frequency blocks,

$\mathbf{V}_i$: complex-valued matrix for number *i* of the frequency blocks for applying an IDFT and for a mapping of the data symbol vector $\mathbf{d}_i$ for example onto sinusoidal subcarriers,

$\mathbf{d}_i$: data symbol vector for number *i* of the p frequency blocks (sub-bands).

According to Fig. 2, a first data symbol vector $\mathbf{d}_1$ comprising $n_1$ data symbols $d_{l,j}$ ($j$ = 1 ... $n_l$) may be applied to a first one 202-1 of a group of IDFT processing units 202-1, 202-2, ..., 202-*p* for performing a first IDFT on the first symbol vector $d_1$. The IDFT may include interpolation and up-conversion by choosing respective IDFT vectors appropriately in terms of length and phase rotations. The IDFT processing unit 202-1 generates a first time domain signal 204-1, which contains a first plurality of subcarriers forming a first frequency block or sub-band of the multicarrier signal. The IDFT of processing unit 202-1 may have a dimension of $n_1$ x $N_1$, with $n_1$ being a number of subcarriers to be modulated for the first frequency block, and $N_1$ being equal to a total number of subcarriers theoretically fitting for a given subcarrier distance into a whole available frequency range (band), when the whole available frequency range would be occupied by subcarriers having a subcarrier spacing according to the first frequency block. In some embodiments the available frequency range may correspond to a spectral gap of a fragmented spectrum or all spectral gaps in a given frequency band.

Like data symbol vector $\mathbf{d}_1$, the further data symbol vectors $\mathbf{d}_2$,..., $\mathbf{d}_p$ may be applied to corresponding further IDFT processing units 202-2, ..., 202-*p* for performing further ID-FTs including interpolation and up-conversion and for generating further time domain signals 204-2, ..., 204-*p*, which each contain the frequency blocks of subcarriers. The processing units 202-1, 202-2, ..., 202-*p* enable a separate inverse Fourier transformation for each frequency block, which could be a sub-band or a subset of a sub-band. That is to say, for each frequency block or sub-band, indexed *i*, $n_i$ complex Quadrature Amplitude Modulation (QAM) data symbols $d_{i,j}$ ($i$ = 1 ... $p$; $j$ = 1 ... $n_i$) may be transformed to time-domain using an individual IDFT-matrix $\mathbf{V}_i$ - leading to individual numbers of subcarriers and/or subcarrier spacings for the different frequency blocks. Thereby $\mathbf{V}_i$ may be of dimension $N_i$ x $n_i$ and include the relevant columns of the inverse Fourier matrix according to the respective sub-band position within the overall available frequency range.

In some embodiments the processor module 202 including the group of IDFT processing units 202-1, 202-2, ..., 202-*p* may be configured to adjust a bandwidth of the resulting multicarrier signal 309 to fill in or cover the spectral gap by (individually) adjusting the bandwidths of the signals 204-1, 204-2, ..., 204-*p* associated with the different frequency blocks of the multicarrier signal.

In one embodiment the processor module processor module 202 including the group of IDFT processing units 202-1, 202-2, ..., 202-*p* may be configured to adjust a subcarrier spacing of the first frequency block corresponding to a subcarrier spacing of the second frequency block and may be configured to associate different numbers $n_1$, $n_2$ of subcarriers to the first and second frequency block. That means that the subcarrier spacing of the first frequency block equals the subcarrier spacing of the second frequency block. The different frequency block or PRB bandwidths result from the different numbers $n_1$, $n_2$ of subcarriers of the first and second frequency block, respectively.

In another embodiment the processor module processor module 202 including the group of IDFT processing units 202-1, 202-2, ..., 202-$p$ may be configured to adjust a number $n_1$ of subcarriers of the first frequency block corresponding to a number $n_2$ of subcarriers of the second frequency block and may be configured to associate different subcarrier spacings with the first and second frequency block of the multicarrier signal. That means that the number $n_1$ of subcarriers of the first frequency block equals the number $n_2$ of subcarriers of the second frequency block. The different PRB bandwidths result from the different subcarrier spacing used for the first and second frequency block, respectively. This may be achieved by adjusting the individual IDFT sizes $N_i$ $(i = 1 ... p)$, for example.

After having performed the IDFTs for the p frequency blocks or PRBs, the resulting first time domain signal 204-1 may be provided to a first one 206-1 of the group of band pass filters 206-1, 206-2, ..., 206-$p$ to perform sideband suppression. This generates a first filtered time domain signal 208-1 corresponding to the first frequency or subcarrier block including $n_1$ subcarriers. A bandwidth of the first band pass filter 206-1 may be adapted so that the first band pass filter 206-1 is able to block and attenuate all frequency components outside of a frequency range of the first frequency block. In a similar way, the further time domain signals 204-2, ..., 204-$p$ may be filtered by corresponding further band pass filters 206-2, ..., 206-$p$ for generating the further filtered time domain signals 208-2, ..., 208-$p$. The band pass filters 206-$i$ $(i = 1, ..., p)$ may each be represented by a Toeplitz matrix $\mathbf{F}_i$ with dimension $(N_i+N_{filter}-1)xN_i$, composed of the respective filter impulse response, enabling the convolution, wherein $N_{filter}$ denotes the filter length of a Finite Impulse Response (FIR) pulse shaping filter.

The filtered time domain signals 208-1, 208-2, ..., 208-$p$ or a sum thereof may be provided to a back end processing unit 210 which may be configured to perform a baseband to RF conversion of the combined filtered time domain signals 208-1, ..., 208-$p$.

The skilled person will appreciate that the functions of the apparatuses 100, 200 may be implemented in the digital and/or the analog signal domain. For example, any signal processing upstream (before) the baseband to RF conversion may be performed in the digital baseband domain, whereas any signal processing downstream (after) the baseband to RF conversion may be performed in the analog signal domain.

The frequency-block-wise filtering of UFMC allows additional flexibility and may be used to avoid Filter-Bank based Multi-Carrier (FBMC) drawbacks. FBMC is using per-subcarrier pulse-shaping filters, typically with a length of more than one multi-carrier symbol. Those filters provide very strong side-lobe suppression and can be implemented efficiently in poly-phase filter-banks.

The filtering per block of subcarriers (e.g. "physical resource block" or "sub-band" in the LTE terminology) according to some embodiments may result in band-pass filters 206-$i$ (i = 1, ..., p) which are spectrally broader in passband than FBMC and thus shorter in time. This shortened time can be used to bring down the filter length, e.g. in the order of the Orthogonal Frequency Division Multiplexing (OFDM) Cyclic Prefix (CP). Short bursts may be supported well with that, as well as operation in fragmented bands. Side-lobe suppression now works in between resource (frequency) blocks, instead in between subcarriers. The filter ramp-up and ramp-down in time domain may provide a symbol shape which has inherent soft protection against inter-symbol interference (ISI), as well as robustness for supporting multiple access users which are not perfectly time-aligned, as e.g. with Autonomous Timing Advance (ATA), meaning that a mobile terminal may listen to downlink synchronization channels of the base station and align its timing based on this information and e.g. additional corrections, dealing with the estimated or worst-case propagation delay. ATA may be regarded as an open-loop approach in contrast to the LTE timing advance control which happens in a closed-loop fashion.

With a system applying filtered multi-carrier, subcarrier grouping is inherently supported. This disclosure proposes different ways to exploit this for accessing fragmented spectrum with highest efficiency, while not breaking other functionalities of the wireless system relying on the subcarrier grouping (e.g. channelization, scheduling etc.).

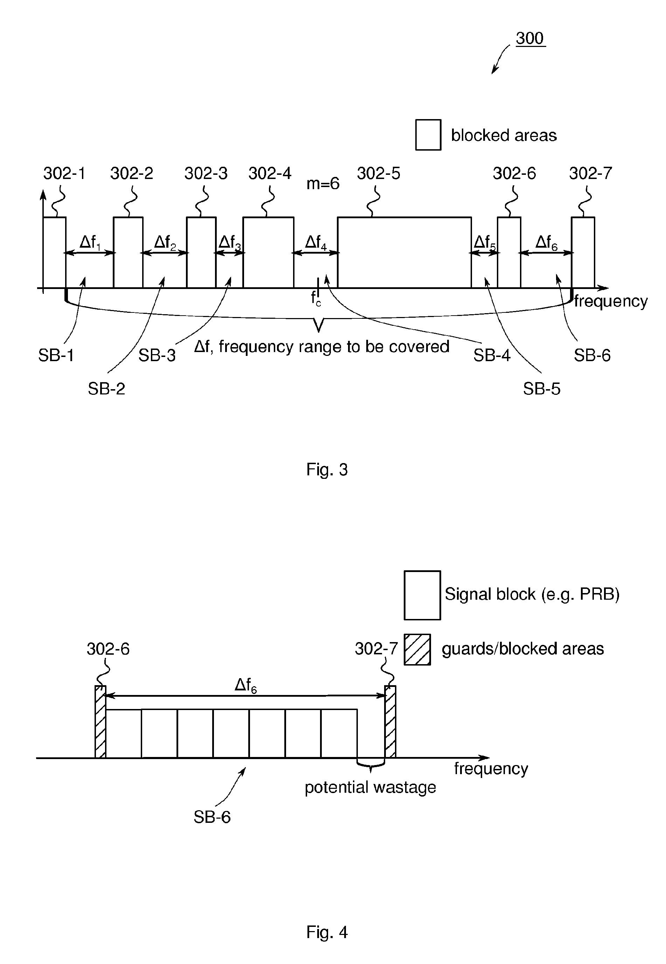

Fig. 3 illustrates a fragmented spectrum 300 including spectrally fragmented blocked or occupied sub-bands 302-1 to 302-7. These sub-bands 302-1 to 302-7 may for example be occupied by wireless systems of different Radio Access Technologies (RATs). The occupied sub-bands 302-1 to 302-7 are separated by available (unoccupied) spectral sub-bands SB-1, ..., SB-6 being open for opportunistic access in the fragmented spectrum 300. As exemplified in Fig.3, the spectral widths $\Delta f_1$, $\Delta f_2$, ..., $\Delta f_6$ of the different spectral sub-bands SB-1, ..., SB-6 being open for opportunistic access are not necessarily identical. Further, the spectral widths $\Delta f_1$, $\Delta f_2$, ..., $\Delta f_6$ will in particular not be multiples of a certain bandwidth of a basic building block, for example a PRB, used to fill the respective sub-band SB-1, ..., SB-6. So, if not dealt with, spectral wastage may occur. This is exemplarily sketched in **Fig. 4** for the available sub-band SB-6 of Fig. 3. Therefore one reason for replacing conventional OFDM by UFMC according to embodiments is the reduction of such spectral wastage.

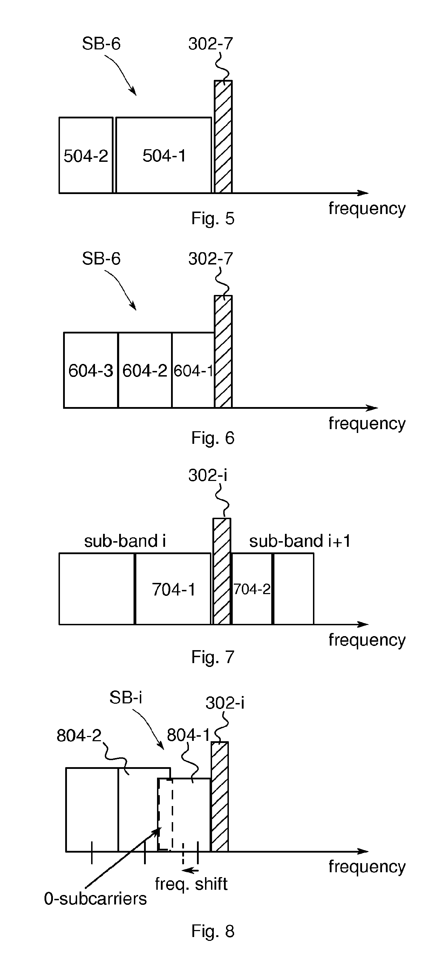

As presented in **Fig. 5,** at least first one 504-1 of the frequency blocks or PRBs of the multicarrier signal may be chosen spectrally wider (having a larger bandwidth) than others. For example, the wider frequency block 504-1 of the multicarrier signal may be located at an (upper or lower) edge of an available sub-band or spectral gap SB-6 of the fragmented spectrum. However, note that any position within the multicarrier signal is possible. As has been explained above, the increased individual bandwidth of frequency block (PRB) 504-1 may either be implemented by increasing the sub-carrier spacing of the frequency block 504-1, by increasing its number of subcarriers, or by a combination thereof. In this way, the spectral width of the respective PRB 504-1, and hence the whole multicarrier signal may be fit to the available frequency range of sub-band SB-6 in between two blocked sub-bands 302-6 and 302-7.

Increasing the bandwidth of one or more frequency blocks of the multicarrier signal may lead to shorter symbol lengths if only subcarrier spacing is increased. Further, separate reception of individual frequency blocks possibly introducing inter-carrier interference may be required. Note that in contrast to OFDM, due to filtering, it is no blocking point to have different symbol durations in different frequency blocks of the multicarrier signal, as signal distortions are limited. As an actual width of a frequency block or PRB depends on the width of an available spectral gap(s), system configuration and respective messaging may be required.

As further presented in Fig. 6, at least first one 604-1 of the frequency blocks or PRBs of the multicarrier signal may additionally or alternatively be chosen spectrally smaller (having a smaller bandwidth) than others. For example, the smaller frequency block 604-1 of the multicarrier signal 109, 209 may be located at an (upper or lower) edge of an available sub-band or spectral gap SB-6 of the fragmented spectrum. However, note that any position within the multicarrier signal is possible. As has been explained above, the reduced individual bandwidth of frequency block (PRB) 604-1 may either be implemented by reducing the subcarrier spacing of the frequency block 604-1, by reducing its number of subcarriers, or by a combination thereof. In this way, the spectral width of the respective PRB 604-1, and hence the whole multicarrier signal 109, 209, may be fit to the available frequency range of sub-band SB-6.

Reducing the bandwidth of one or more frequency blocks of the multicarrier signal may lead to longer symbol lengths if only subcarrier spacing is decreased. Again, separate reception of individual frequency blocks possibly introducing inter-carrier interference may be required. Note that in contrast to OFDM, due to filtering, it is no blocking point to have different symbol durations in different frequency blocks of the multicarrier signal, as signal distortions are limited. As an actual width of a frequency block or PRB depends on the width of an available spectral gap(s), system configuration and respective messaging may be required.

As illustrated in **Fig. 7,** a first frequency block 704-1 of the multicarrier signal may be associated to a first available sub-band SB-*i* of the fragmented spectrum 300, while a second frequency block 704-2 of the multicarrier signal may be associated to a second available sub-band SB-(*i*+1) of the fragmented spectrum 300. Thereby the first and the second available sub-bands SB-5 and SB-6 may be separated by a part 302-*i* of the spectrum used or blocked by a system of a different radio access technology. In such embodiments the adjustment of the spectral widths of PRBs 704-1 and 704-2 may depend on the spectral widths of the available available sub-bands SB-5 and SB-6. Instead of fixing the PRB width for the overall system, one may also match the PRB width on a per (available) sub-band basis. This can again be done again either by varying the subcarrier spacing or the number of subcarriers (or a combination thereof).

In such embodiments a number of physical resource elements per PRB may vary between sub-bands if the number of subcarriers is varied. A length of single symbols may be different for the different available sub-bands if the subcarrier spacing is varied.

In one embodiment, a bandwidth of a first frequency block (PRB) of the multicarrier signal may be defined by one or more first subcarriers of the first frequency block carrying first useful data. Thereby the term "useful data" denotes any useful information that can be received and used by a receiver for data detection. Likewise, a bandwidth of a second frequency block (PRB of the multicarrier signal may be defined by one or more second subcarriers of the second frequency block carrying second useful data. In contrast to "useful data", some embodiments may also foresee dummy data. Thereby the term "dummy data" denotes benign information that does not contain any useful data, but serves to reserve space where real data is nominally present.

In embodiments applying partial subcarrier-blanking of (edge) PRBs as illustrated in **Fig. 8,** the apparatus' processor module 102 may be configured to provide one or more subcarriers in an edge region of the first frequency block 804-1 as one or more guard subcarriers. Thereby a guard subcarrier carries predefined dummy symbols or guard symbols. Hence, depending on the available bandwidth some of the subcarriers of the (edge) PRB 804-1 may blanked (for example with zeros instead of data symbols), for example the ones that would interfere with the subcarriers of the adjacent PRB 804-2. This way sub-carrier spacing and number of subcarriers may be kept.

To fit the reduced PRB 804-1 into the available sub-band SB-*i*, the processor module 102 may be configured to overlap the edge region comprising the guard or blanked subcarriers with an edge region (comprising guard or blanked subcarriers) of an adjacent frequency block 804-2. The resulting overlapping region 804-12 between the directly adjacent frequency blocks 804-1 and 804-2 of the multicarrier signal is illustrated in Fig. 8. In one embodiment, the processor module 102 may be configured to overlap the edge regions of frequency blocks 804-1 and 804-2 by shifting a center frequency (normally corresponding to a regular center frequency raster) of the first and/or the adjacent frequency block towards the neighboring frequency block to obtain overlapping edge regions of the frequency blocks.

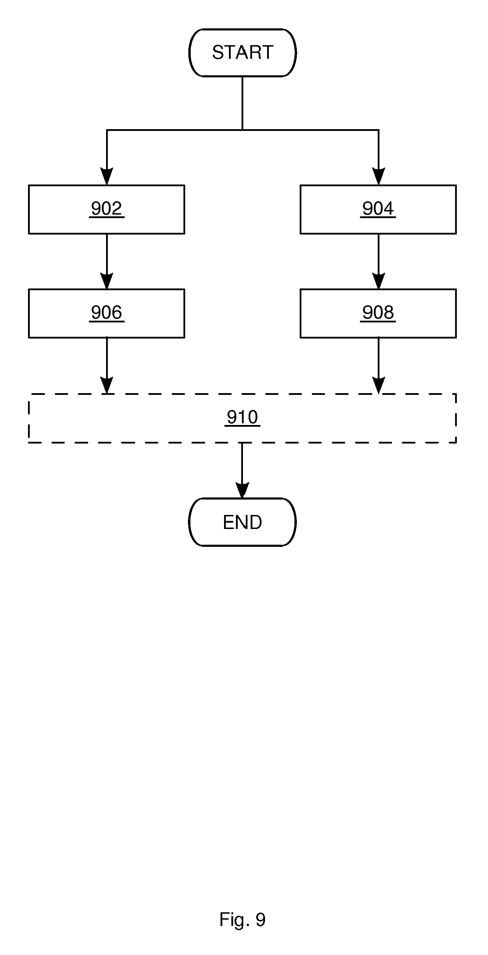

To summarize, embodiments of the apparatuses 100, 200 may perform a method for providing the multicarrier signal 109, 209, when the apparatuses 100, 200 are operative. A schematic flow chart of such a method 900 is schematically illustrated in **Fig. 9.**

Embodiments of the method 900 include an act 902 of providing a first plurality of subcarriers of the multicarrier signal in a first frequency block and an act 904 of providing a second plurality of subcarriers of the multicarrier signal in a second frequency block.

According to embodiments a bandwidth of the first frequency block differs from a bandwidth of the second frequency block. Further, the method 900 includes an act 906 of filtering the first frequency block for sideband suppression outside of the first frequency block and an act 908 of filtering the second frequency block for sideband suppression outside of the second frequency block. In an optional act 910, the filtered first and second frequency blocks or signals including the filtered first and second frequency blocks may be combined to obtain the multicarrier signal.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks shall be understood as functional blocks comprising circuitry that is adapted for performing a certain function, respectively. Hence, a "module or entity for s.th." may as well be understood as a "module or entity being adapted or suited for s.th.". A module or entity being adapted for performing a certain function does, hence, not imply that such means necessarily is performing said function (at a given time instant).

Functions of various elements shown in the figures, including any functional blocks may be provided through the use of dedicated hardware, such as "a processor", "a controller", etc. as well as hardware capable of executing software in association with appropriate software. Moreover, any entity described herein as functional block, may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. Apparatus (100; 200) for providing a multicarrier signal (109; 209), the apparatus comprising:

a processor module (102; 202) to provide a first plurality of subcarriers of the multicarrier signal in a first frequency block (104-1; 204-1) and to provide a second plurality of subcarriers of the multicarrier signal in a second frequency block (104-2; 204-2), wherein a bandwidth of the first frequency block (104-1; 204-1) differs from a bandwidth of the second frequency block (104-2; 204-2);
a first filter module (106-1; 206-1) to filter the first frequency block (104-1; 204-1) for sideband suppression outside of the first frequency block; and

a second filter module (106-2; 206-2) to filter the second frequency block (104-2; 204-2) for sideband suppression outside of the second frequency block.

2. The apparatus (100; 200) of claim 1, wherein the processor module (102; 202) is configured to adjust a subcarrier spacing of the first frequency block (104-1; 204-1) corresponding to a subcarrier spacing of the second frequency block (104-2; 204-2) and to associate different numbers of subcarriers with the first and second frequency blocks.

3. The apparatus (100; 200) of claim 1, wherein the processor module (102; 202) is configured to adjust a number of subcarriers of the first frequency block (104-1; 204-1) corresponding to a number of subcarriers of the second frequency block (104-2; 204-2) and to associate different subcarrier spacings with the first and second frequency blocks of the multicarrier signal.

4. The apparatus (100; 200) of claim 1, wherein the processor module (102; 202) is configured to adjust a bandwidth of the multicarrier signal (109; 209) to fill in a spectral gap of a fragmented spectrum by adjusting the bandwidth of the first and/or the second frequency block of the multicarrier signal.

5. The apparatus (100; 200) of claim 1, wherein the processor module (102; 202) is configured to provide the first frequency block spectrally adjacent to the second frequency block.

6. The apparatus (100; 200) of claim 1, wherein the processor module (102; 202) is configured to associate the first frequency block of the multicarrier signal to a first sub-band of a fragmented spectrum and to associate the second frequency block of the multicarrier signal to a second sub-band of the fragmented spectrum, wherein the first and the second sub-bands are separated by an unavailable part of the fragmented spectrum.

7. The apparatus (100; 200) of claim 1, wherein the processor module (102; 202) is configured to provide one or more subcarriers in an edge region of the first frequency block as one or more guard subcarriers, wherein a guard subcarrier carries predefined guard symbols, and to overlap the edge region comprising the guard subcarriers with an edge region of an adjacent frequency block.

8. The apparatus (100; 200) of claim 7, wherein the processor module (102; 202) is configured to overlap the edge regions by shifting a center frequency of the first and/or the adjacent frequency block.

9. The apparatus (100; 200) of claim 1, wherein the bandwidth of the first frequency block is defined by one or more first subcarriers carrying first useful data and wherein the bandwidth of the second frequency block is defined by one or more second subcarriers carrying second useful data.

10. The apparatus (100; 200) of claim 1, wherein the processor module (102; 202) is configured to perform an inverse Fourier transform of the first frequency block to generate a first time domain signal (204-1) corresponding to the first plurality of subcarriers and to perform an inverse Fourier transform of the second frequency block to generate a second time domain signal (204-2) corresponding to the second plurality of subcarriers, wherein the first filter module (106-1; 206-1) is configured to filter the first time domain signal, and wherein the second filter module (106-2; 206-2) is configured to filter the second time domain signal.

11. The apparatus (100; 200) of claim 1, wherein the processor module (102; 202) is configured to perform a first frequency shift to a first frequency range for the first frequency block and to perform a second frequency shift to a second frequency range for the second frequency block.

12. The apparatus (100; 200) of claim 1, wherein the processor module (102; 202) is configured adjust a bandwidth of the first and/or the second frequency block in response to an observed spectral environment.

13. A base station or a mobile terminal for a wireless communication system, the base station or the mobile terminal comprising an apparatus (100; 200) for providing a multicarrier signal according to claim 1.

14. Method (900) for providing a multicarrier signal, the method comprising:

  providing (902) a first plurality of subcarriers of the multicarrier signal in a first frequency block;
  providing (904) a second plurality of subcarriers of the multicarrier signal in a second frequency block, wherein a bandwidth of the first frequency block differs from a bandwidth of the second frequency block;

filtering (906) the first frequency block for sideband suppression outside of the first frequency block; and

filtering (908) the second frequency block for sideband suppression outside of the second frequency block.

**15.** A computer program having a program code for performing the method of claim 14, when the computer program is executed on a programmable hardware device.

**Amended claims in accordance with Rule 137(2) EPC.**

**1.** Apparatus (100; 200) for providing a multicarrier signal (109; 209), the apparatus comprising:

a processor module (102; 202) to provide
a first baseband signal comprising a first plurality of subcarriers of the multicarrier signal in a first frequency block (104-1; 204-1), wherein a first subcarrier of the first plurality of subcarriers is modulated with a different data symbol than a second subcarrier of the first plurality of subcarriers, and
a second baseband signal comprising a second plurality of subcarriers of the multicarrier signal in a second frequency block (104-2; 204-2), wherein a first subcarrier of the second plurality of subcarriers is modulated with a different data symbol than a second subcarrier of the second plurality of subcarriers,
wherein a bandwidth of the first frequency block (104-1; 204-1) differs from a bandwidth of the second frequency block (104-2; 204-2);
a first filter module (106-1; 206-1) to filter the first baseband signal comprising the first frequency block (104-1; 204-1) for sideband suppression outside of the first frequency block;
a second filter module (106-2; 206-2) to filter the second baseband signal comprising the second frequency block (104-2; 204-2) for sideband suppression outside of the second frequency block;
a combiner module to combine the filtered first baseband signal (108-1; 208-1) and the filtered second baseband signal (108-2; 208-2) to obtain the multicarrier signal (109; 209) in the baseband domain; and
an up-conversion module (210) to convert the multicarrier signal (109; 209) from the baseband domain to radio frequency, RF, domain.

**2.** The apparatus (100; 200) of claim 1, wherein the processor module (102; 202) is configured to adjust a subcarrier spacing of the first frequency block (104-1; 204-1) corresponding to a subcarrier spacing of the second frequency block (104-2; 204-2) and to associate different numbers of subcarriers with the first and second frequency blocks.

**3.** The apparatus (100; 200) of claim 1, wherein the processor module (102; 202) is configured to adjust a number of subcarriers of the first frequency block (104-1; 204-1) corresponding to a number of subcarriers of the second frequency block (104-2; 204-2) and to associate different subcarrier spacings with the first and second frequency blocks of the multicarrier signal.

**4.** The apparatus (100; 200) of claim 1, wherein the processor module (102; 202) is configured to adjust a bandwidth of the multicarrier signal (109; 209) to fill in a spectral gap of a fragmented spectrum by adjusting the bandwidth of the first and/or the second frequency block of the multicarrier signal.

**5.** The apparatus (100; 200) of claim 1, wherein the processor module (102; 202) is configured to provide the first frequency block spectrally adjacent to the second frequency block.

**6.** The apparatus (100; 200) of claim 1, wherein the processor module (102; 202) is configured to associate the first frequency block of the multicarrier signal to a first sub-band of a fragmented spectrum and to associate the second frequency block of the multicarrier signal to a second sub-band of the fragmented spectrum, wherein the first and the second sub-bands are separated by an unavailable part of the fragmented spectrum.

**7.** The apparatus (100; 200) of claim 1, wherein the processor module (102; 202) is configured to provide one or more subcarriers in an edge region of the first frequency block as one or more guard subcarriers, wherein a guard subcarrier carries predefined guard symbols, and to overlap the edge region comprising the guard subcarriers with an edge region of an adjacent frequency block.

**8.** The apparatus (100; 200) of claim 7, wherein the processor module (102; 202) is configured to overlap the edge regions by shifting a center frequency of the first and/or the adjacent frequency block.

9. The apparatus (100; 200) of claim 1, wherein the bandwidth of the first frequency block is defined by one or more first subcarriers carrying first useful data and wherein the bandwidth of the second frequency block is defined by one or more second subcarriers carrying second useful data.

10. The apparatus (100; 200) of claim 1, wherein the processor module (102; 202) is configured to perform an inverse Fourier transform of the first frequency block to generate a first time domain signal (204-1) corresponding to the first plurality of subcarriers and to perform an inverse Fourier transform of the second frequency block to generate a second time domain signal (204-2) corresponding to the second plurality of subcarriers, wherein the first filter module (106-1; 206-1) is configured to filter the first time domain signal, and wherein the second filter module (106-2; 206-2) is configured to filter the second time domain signal.

11. The apparatus (100; 200) of claim 1, wherein the processor module (102; 202) is configured to perform a first frequency shift to a first frequency range for the first frequency block and to perform a second frequency shift to a second frequency range for the second frequency block.

12. The apparatus (100; 200) of claim 1, wherein the processor module (102; 202) is configured adjust a bandwidth of the first and/or the second frequency block in response to an observed spectral environment.

13. A base station or a mobile terminal for a wireless communication system, the base station or the mobile terminal comprising an apparatus (100; 200) for providing a multicarrier signal according to claim 1.

14. Method (900) for providing a multicarrier signal, the method comprising:

providing (902) a first baseband signal comprising a first plurality of subcarriers of the multicarrier signal in a first frequency block, wherein a first subcarrier of the first plurality of subcarriers is modulated with a different data symbol than a second subcarrier of the first plurality of subcarriers;
providing (904) a second baseband signal comprising a second plurality of subcarriers of the multicarrier signal in a second frequency block, wherein a first subcarrier of the second plurality of subcarriers is modulated with a different data symbol than a second subcarrier of the second plurality of subcarriers,
wherein a bandwidth of the first frequency block differs from a bandwidth of the second frequency block;
filtering (906) the first baseband signal comprising the first frequency block for sideband suppression outside of the first frequency block; and
filtering (908) the second baseband signal comprising the second frequency block for sideband suppression outside of the second frequency block;
combining the filtered first baseband signal (108-1; 208-1) and the filtered second baseband signal (108-2; 208-2) to obtain the multicarrier signal (109; 209) in the baseband domain; and
converting the multicarrier signal (109; 209) from the baseband domain to radio frequency, RF, domain.

15. A computer program having a program code for performing the method of claim 14, when the computer program is executed on a programmable hardware device.

100

104-1

108-1

101

102

BW1

106-1

109

BW2

104-2

106-2

108-2

+

BW1 ≠ BW2

Fig. 1

Fig. 2

Fig. 3

Fig. 4

SB-6    302-7

504-2    504-1

frequency

Fig. 5

SB-6    302-7

604-3 | 604-2 | 604-1

frequency

Fig. 6

302-i

sub-band i    sub-band i+1

704-1    704-2

frequency

Fig. 7

SB-i    302-i

804-2    804-1

freq. shift

0-subcarriers

Fig. 8

START

| 902 |

| 904 |

| 906 |

| 908 |

| 910 |

END

Fig. 9

Europäisches
Patentamt

European
Patent Office

Office européen
des brevets

**EUROPEAN SEARCH REPORT**

Application Number

EP 14 30 5273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/246558 A1 (HAREL TOM [IL]) 30 September 2010 (2010-09-30) <br><br> * paragraph [0003]; figure 1 * <br> * paragraph [0019] - paragraph [0024] * <br> ----- | 1,2,5, 7-11, 13-15 | INV. <br> H04L5/00 <br> H04L25/03 <br> H04L27/26 <br> H04B1/00 |
| X | WO 2011/009157 A1 (COMMW SCIENT IND RES ORG [AU]; HUANG XIAOJING [AU]; MURRAY BOYD MCGREG) 27 January 2011 (2011-01-27) <br> * figures 10-13 * <br> * page 10, line 1 - page 12, line 32 * <br> ----- | 1-15 | |
| | | | TECHNICAL FIELDS SEARCHED (IPC) <br><br> H04L <br> H04B |

The present search report has been drawn up for all claims

| Place of search | Date of completion of the search | Examiner |
|---|---|---|
| Berlin | 3 July 2014 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 5273

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2014

| Patent document cited in search report | | Publication date | Patent family member(s) | | Publication date |
|---|---|---|---|---|---|
| US 2010246558 | A1 | 30-09-2010 | NONE | | |
| WO 2011009157 | A1 | 27-01-2011 | AU | 2010276072 A1 | 01-03-2012 |
| | | | EP | 2504940 A1 | 03-10-2012 |
| | | | US | 2012182948 A1 | 19-07-2012 |
| | | | WO | 2011009157 A1 | 27-01-2011 |

For more details about this annex : see Official Journal of the European Patent Office, No. 12/82